# EUROPEAN PATENT APPLICATION

(11) **EP 2 816 559 A2**
(43) Date of publication of application: **24.12.2014**
(21) Application number: 14172224.9
(22) Date of filing: 12.06.2014
(51) Int. Cl.: G10L 21/10, G06F 17/28, G06T 13/40

(54) **Translation system comprising display apparatus and server and control method thereof**

(30) Priority: 18.06.2013 KR 20130069993
(71) Applicant: Samsung Electronics Co., Ltd, Gyeonggi-do 443-742 (KR)
(72) Inventor: Jeong, Jae-yun, Gyeonggi-do (KR); Kim, Sung-jin, Gyeonggi-do (KR); Kim, Yong-gyoo, Seoul (KR)
(74) Representative: Hewett, Jonathan Michael Richard

(57) **Abstract**

A display apparatus is provided. The display apparatus includes: an input means configured to receive a user's face shape and voice; a voice processor configured to analyze the input voice and extract translated data, and convert the translated data into translated voice; an image processor configured to detect information related to a mouth area of the user's face shape which corresponds to the translated data, and create a changed shape of a user's face based on the detected information related to the mouth area; and an output means configured to output the translated voice and the changed shape of the user's face.

## Description

The present invention relates to a translation system including a display apparatus and a server, and a method of controlling the display apparatus. More particularly, the present invention relates to a translation system including a display apparatus configured to convert an input voice and image and to output the converted voice and image, a server, and a method of controlling the display apparatus.

With the development of communication and electronic technology, video telephone or video call technologies are increasingly used. In addition, as exchanges with other countries increase, more opportunities exist for a user to make a video telephone call with another user who speaks a different language. A user who is not fluent in the foreign language finds it more difficult to understand the contents of the dialogue when talking over a video telephone call than when actually meeting and talking face to face. In order to resolve these problems, automatic translating apparatuses are being developed.

Therefore, a need exists for technologies to convert images of the counterpart as well as the voice of the counterpart.

According to an exemplary embodiment a display apparatus is provided. The display apparatus includes: an inputter configured to receive a user's face shape and voice; voice processor configured to analyze the input voice and extract translated data, and convert the translated data into translated voice; an image processor configured to detect information related to a mouth area of the user's face shape which corresponds to the translated data, and create a changed user's face shape based on the detected information related to the mouth area; and an outputter configured to output the translated voice and changed shape of the user's face.

The image processor may be configured to synchronize the changed shape of the user's face to correspond to the translated voice.

The voice processor may be configured to compare a length of the input voice and a length of the translated voice and adjust the length of the translated voice.

The voice processor may extract at least one characteristic of a tone, pitch and sound quality of the input voice and apply the extracted characteristic to the translated voice.

The information related to the mouth area may be mesh information where characteristic points of the stored mouth-shaped image are connected, and the image processor may be configured to extract a phoneme from the translated data and search for a corresponding mouth shaped image, and map the mesh information where the characteristic points of the searched mouth shape image are connected to the user's face shape in order to create a changed shape of the user's face.

The information related to the mouth area may be a stored mouth shape image, and the image processor may extract a phoneme from the translated data and search for a corresponding mouth-shaped image, and edit the searched mouth-shaped image in the shape of the face in order to create a changed shape of the user's face.

The display apparatus may further include a communicator configured to communicate with a server, and the communicator may transmit the shape of the user's face and input voice to the server, and receive the translated voice and changed shape of the user's face from the server.

The display apparatus may further include a communicator configured to communicate with a server, the communicator may be configured to transmit the user's face shape and input voice to the server and receive the translated voice and mouth area information from the server, and the image processor may create the changed shape of the user's face based on the received information related to the mouth area.

According to an exemplary embodiment a server configured to communicate with a display apparatus is provided, the server including: a communicator configured to receive a user's face shape and voice from the display apparatus; a voice processor configured to analyze the received voice and to extract translated data, and convert the translated data into translated voice; and an image processor configured to detect information related to a mouth area of the user's face shape which corresponds to the translated data, wherein the communicator transmits the information of the mouth area to the display apparatus, together with the translated voice.

The image processor may create a changed shape of a user's face based on the detected information related to the mouth area, and the communicator may transmit the changed shape of the user's face to the display apparatus together with the translated voice.

According to an exemplary embodiment a conversion system comprising a display apparatus and a server is provided; the system including: a display apparatus configured to transmit the input user's face shape and input voice to the server; and a server configured to analyze the input voice and extract the translated data and convert the translated data into translated voice, and detect information related to a mouth area of the user's face shape which corresponds to the translated data in order to create a changed user's face shape mapped from the user's face shape, wherein the display apparatus receives the changed shape of the user's face or information related to the mouth area from the server together with the translated voice.

According to an exemplary embodiment a method of controlling a display apparatus is provided, the method including: receiving a user's face shape and voice; analyzing the input voice and extracting the translated data; detecting information related to a mouth area of the user's face shape which corresponds to the translated data, and creating a changed shape of user's face based on the detected information related to the mouth area; converting the translated data into a translated voice; and outputting the translated voice and changed shape of the user's face shape.

The outputting may synchronize the changed shape of the user's face to the translated voice.

The method of controlling the display apparatus may further include comparing a length of the input voice and a length of the translated voice and adjusting the length of the translated voice, based on the comparison.

The method of controlling the display apparatus may further include extracting at least one characteristic of a tone, pitch and sound quality of the input voice and applying the extracted characteristic to the translated voice.

The information related to the mouth area may be mesh information where characteristic points of the stored mouth-shaped image are connected, and the creating a changed shape of a user's face may extract a phoneme from the translated data and search for a corresponding mouth-shaped image, and map the mesh information where the characteristic points of the searched mouth-shaped image are connected to the user's face shape in order to create a changed shape of a user's face.

The information of the mouth area may be a stored mouth-shaped image, and the creating a changed shape of a user's face may include extracting a phoneme from the translated data and searching for a corresponding mouth-shaped image, and edit the searched mouth-shaped image in the face shape to create a changed shape of user's face.

The method of controlling the display apparatus may further comprise transmitting the user's face shape and input voice to the server, and receiving from the server the translated voice and changed shape of the user's face, and the outputting may output the received translated voice and received changed shape of the user's face.

The method of controlling the display apparatus may further comprise transmitting the user's face shape and input voice to the server, and receiving from the translated voice and changed shape of the user's face shape, and the creating the changed user's face shape may create the changed user's face shape based on the received information related to the mouth area.

An aspect of an exemplary embodiment may provide a display apparatus including: a voice processor configured to analyze an input voice and extract translated data, and convert the translated data into translated voice; and an image processor configured to detect information related to a mouth area of the user's face shape which corresponds to the translated data, and create a changed shape of a user's face based on the detected information.

The display apparatus may further include an inputter configured to receive a user's face shape and voice.

The display apparatus may further include an outputter configured to output the translated voice and changed shape of the user's face.

The image processor may be configured to synchronize the changed shape of the user's face to the translated voice.

The voice processor may be configured to compare a length of the input voice and a length of the translated voice and adjust the length of the translated voice based on the comparison.

Additionally, the voice processor may be configured to extract at least one characteristic of a tone, pitch and sound quality of the input voice and applies the extracted characteristic to the translated voice.

The information related to the mouth area may be configured to be a stored mouth-shaped image.

The image processor may be configured to extract a phoneme from the translated data and searches for a corresponding mouth-shaped image, and edits the searched mouth-shaped image in the face shape to create a changed shape of the user's face.

The display apparatus may further include: a communicator configured to communicate with a server, wherein the communicator transmits the user's face shape and input voice to the server, and receives from the server the translated voice and changed shaped of the user's face.

The above and/or other aspects of the exemplary embodiments will be more apparent by describing certain present disclosure with reference to the accompanying drawings, in which:
FIG. 1 is a block diagram of a display apparatus according to an exemplary embodiment;
FIG. 2 is a block diagram of a display apparatus according to an exemplary embodiment;
FIG. 3 is a block diagram of a server according to an exemplary embodiment;
FIG. 4 is a view explaining a process of detecting mouth area information according to an exemplary embodiment;
FIG. 5 is a view explaining a process of creating a changed shape of a user face according to an exemplary embodiment;
FIG. 6 is a view explaining a process of creating a changed shape of a user face according to an exemplary embodiment;
FIG. 7 is a view explaining outputting a changed voice and image according to an exemplary embodiment;
FIG. 8 is a timing diagram explaining a face changing system according to an exemplary embodiment;
FIG. 9 is a timing diagram explaining a face changing system according to another exemplary embodiment;
FIG. 10 is a timing diagram explaining a face changing system according to another exemplary embodiment; and
FIG. 11 is a flowchart of a method of controlling a display apparatus according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, exemplary embodiments can be practiced without those specifically defined matters. Also, well-known functions or constructions are not described in detail since they would obscure the application with unnecessary detail.

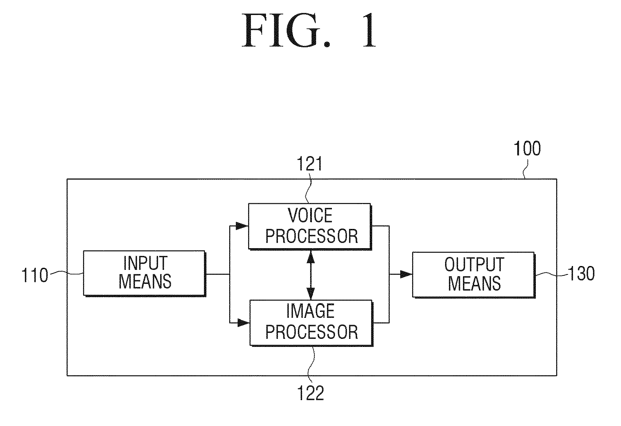

FIG. 1 is a block diagram of a display apparatus according to an exemplary embodiment. With reference to FIG. 1, the display apparatus 100 includes an input means 110 (also referred to as an inputter), voice processor 121, image processor 122, and output means 130 (also referred to as an outputter).

For example, a display apparatus 100 may be a tablet PC, portable multimedia player (PMP), personal digital assistant (PDA), smart phone, mobile phone, digital photo frame, game machine, PC, laptop computer, digital TV, or kiosk, etc.

The inputter 110 receives an input of a user's face shape and voice.

The voice processor 121 analyzes the input voice and extracts translated data, and converts the extracted translated data into translated voice. In an exemplary embodiment, the voice processor 121 receives an audio signal having an analogue format containing a user's voice and converts it into a digital signal. Noise is removed from the input digital signal. Text information is created from the digital signal from which noise has been removed. The created text information is analyzed and is then translated into a determined language. It is possible to set a particular language as a default language. Or the user may select a translatable language. For example, English may be set as the default language, and then the user may change the default language to Japanese, Korean, French and Spanish, etc.

Text information which has been translated is called translated data. Translated data may be used in the image processor 122 to change the shape of the user's face. Furthermore, translated data may be converted into translated voice having an analogue format to be processed by the voice processor 121.

The voice processor 121 may compare the length of the input voice and the length of the translated voice and adjust the length of the translated voice. In addition, the voice processor 121 may extract at least one characteristic of the tone of the input voice, pitch, and sound quality and apply the extracted characteristic to the translated voice. This process will be explained in further detail, hereinbelow.

The image processor 122 may detect information related to a mouth area of a user's face shape which corresponds to the translated data, and create a changed shape of a user's face based on the detected mouth area information.

The image processor 122 extracts a phoneme from the translated data. A phoneme is the smallest unit of sound which is significant in a language. For example, Hello may be expressed as being pronounced "helou", and a user may pronounce it according to the pronunciation symbol. Therefore, the phoneme of Hello may be separated into [hel], [lo], and [u]. The image processor 122 searches for a corresponding visual phoneme from among the visual phoneme or stored viseme. A visual phoneme refers to an image that may be used to describe a particular sound. For example, it may be a mouth-shaped image which corresponds to each phoneme.

For example, in the case of Hello, the image processor 122 searches for a mouth shape image which corresponds to [hel], [lo], and [u]. When there is no mouth shape image that exactly corresponds to [hel], [lo], and [u], a correlation may be used to search for a mouth shape image that is most correlated as the corresponding mouth shape image.

The image processor 122 detects information related to the mouth area from the searched mouth shape image. The information related to the mouth area may be mesh information having characteristic points of the stored mouth shape image that have been connected or a stored mouth shape image. The image processor 122 may map the mesh information to the shape of the input user's face in order to create a changed shape of a user's face. Otherwise, the image processor 122 may edit the searched mouth shape image in the input user's face shape to create a changed user's face shape. The image processor 122 may synchronize the changed user's face shape to the translated voice.

The outputter 130 outputs the translated voice and changed shape of the user's face.

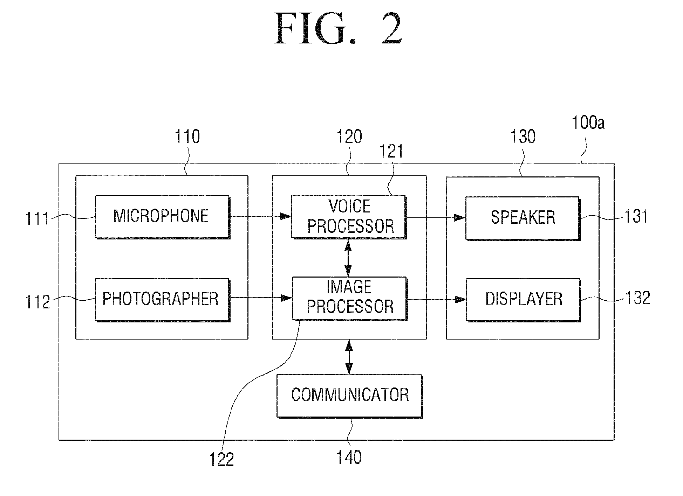

FIG. 2 is a block diagram of a display apparatus according to another exemplary embodiment.

With reference to FIG. 2, the display apparatus 100a may include an inputter 110, controller 120, outputter 130 and communicator 140.

The inputter 110 receives an input of a user's face shape and voice. The inputter 110 may include a microphone 111 and/or a camera 112. The microphone 111 receives a user's voice, and the camera 112 receives a user's face shape. The microphone 111 converts mechanical vibrations made by sound waves of the user's voice into electrical signals and transmit the converted electrical signals to the image processor 122.

In FIG. 2, it is illustrated that the inputter 110 includes a microphone 111, and camera 112, but the inputter 110 may receive an input of a face shape and a voice from the communicator 140 and storage (not illustrated) etc. For example, the inputter 110 may receive an input of a face shape and voice from another display apparatus or server through the communicator 140, or may receive an input of a face shape and voice from contents stored in the storage. In this case, the inputter 110 may operate in the same manner as an input interface.

The controller 120 may include a voice processor 121 and an image processor 122. Operations of the voice processor 121 and the image processor 122 are the same as explained in FIG. 1 and thus further explanation is omitted. However, FIG. 1 illustrates the voice processor 121 and the image processor 122 being separate from each other, but they may be separate modules of one controller 120, as in FIG. 2.

The outputter 130 outputs the translated voice and changed shape of the user's face. The outputter 130 may include a speaker 131 and displayer 132. That is, the speaker 131 may output the translated voice, and the displayer 132 may output the changed shape of the user's face. Furthermore, the outputter 130 may output the translated voice and changed shape of the user's face shape to the communicator 140 and the storage (not illustrated). For example, the outputter 130 may transmit the translated voice and user's face shape to another display apparatus or server etc. through the communicator 140, or may store the translated voice and user's face shape in the storage. In this case, the outputter 130 may operate in the same manner as an output interface.

The communicator 140 may perform communication with the server in order to transmit the user's face shape and voice to the server, and may receive the translated voice from the server. In addition, the communicator 140 may receive the changed shape of the user's face or mouth area information. The server may store a mouth-shaped image which corresponds to a phoneme in a database. The display apparatus 100 may transmit to the server the shape of the user's face and voice input through the communicator 140. The server may convert the user's voice into a translated voice. In addition, the server may detect mouth area information that may be used to create a changed shape of a user's face or may change the user's face shape. The communicator 140 may receive the changed shape of the user's face or detected mouth information together with the translated voice.

Hereinbelow, is explanation on a block diagram of a server for extracting information for translating the user's voice and changing the shape of the user's face.

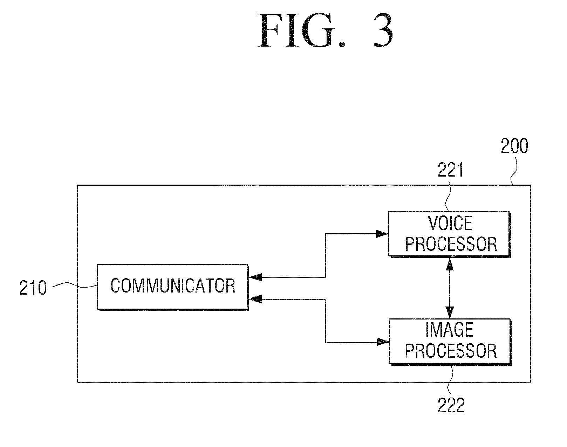

FIG. 3 is a block diagram of a server according to an exemplary embodiment.

With reference to FIG. 3, the server 200 includes a communicator 210, voice processor 221 and image processor 222.

The communicator 210 receives a user's face shape and voice from the display apparatus.

The voice processor 221 analyzes the received voice and extracts translated data, and converts the extracted translated data into translated voice. In an exemplary embodiment, the voice processor 221 creates text information from the received voice and analyzes the created text information to perform translation. When the translation is performed, translated data is created. In addition, the voice processor 221 converts the translated data into translated voice.

The voice processor 221 may compare the length of the input voice and the length of the translated voice and may adjust the length of the translated voice. In addition, the voice processor 221 may extract at least one characteristic of the input voice tone, pitch, and sound quality, and may apply the extracted characteristic to the translated voice.

The image processor 222 uses the created translated data to detect the information related to the mouth area of the user's face shape. The server 200 may store a phoneme or a mouth shape image which corresponds to the phoneme. In addition, the server 200 may create a user profile, and may store a mouth-shaped image which corresponds to a phoneme for each user in the user profile. In addition, the server 200 may use the received user's face shape and voice to store a new mouth-shaped image or update the stored mouth-shaped image.

The image processor 222 extracts a phoneme from the translated data and searches for a corresponding mouth-shaped image. When there is no corresponding mouth-shaped image, a correlation may be used to search for a mouth-shaped image that is most closely correlated as the corresponding mouth-shaped image.

The image processor 222 may detect mouth area information from the searched mouth-shaped image. The mouth area information may be mesh information having characteristic points of the stored mouth-shaped image that have been connected or a stored mouth-shaped image.

The communicator 210 may transmit the translated voice and mouth area information to the display apparatus.

Otherwise, the image processor 222 may detect mouth area information related to the shape of the user's face which corresponds to the translated data, and create a changed shape of the user's face based on the detected mouth area information. In response to the mouth area information being mesh information, the mesh information may be mapped to the mouth area of the received user's face shape in order to create a changed shape of the user's face. In response to the information of the detected mouth area being a mouth-shaped image, the searched mouth-shaped image may be edited in the received user's face shape in order to create a changed shape of the user's face. In this case, the communicator 210 may transmit the translated voice and changed shape of the user's face to the display apparatus.

Aforementioned was an explanation related to the configuration of a display apparatus and a server of the exemplary embodiments. Hereinbelow is an explanation related to a process of detecting mouth area information and creating a changed shape of a user's face.

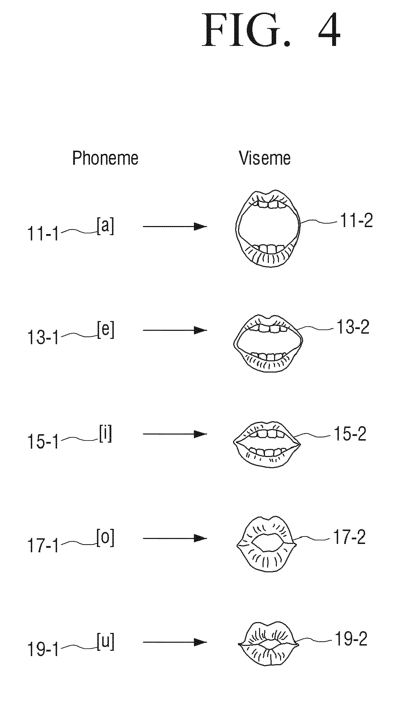

FIG. 4 is a view which explains a process of detecting mouth area information according to an exemplary embodiment.

With reference to FIG. 4, a phoneme and a visual viseme corresponding to the phoneme are illustrated. A phoneme is the smallest unit of sound which is significant in a language. A visual viseme may be a mouth-shaped image which corresponds to each phoneme.

The display apparatus may store a phoneme and a mouth-shaped image which corresponds to the phoneme. The phoneme 11-1 of the pronunciation symbol [a] corresponds to the mouth shape image 11-2 when pronouncing [a], and the phoneme 11-1 of [a] and the mouth shape image 11-2 when pronouncing [a] is stored in the display apparatus. Likewise, phonemes 13-1, 15-1, 17-1, and 19-1 of pronunciation symbols [e], [i], [o], [u] and mouth shape images 13-2, 15-2, 17-2, 19-2 which corresponds to each pronunciation symbol is stored in the display apparatus.

The display apparatus at an initial stage may have a mouth-shaped image of a standard user which corresponds to each phoneme stored therein. When the display apparatus receives an input of a user's mouth-shaped image, the display apparatus may match the received user's mouth shape image to the corresponding phoneme, and may additional store the input user's mouth-shaped image, or may substitute the stored mouth shape image for a newly input mouth-shaped image. Since a phoneme and a corresponding mouth-shaped image are based on pronunciation symbols, they may be used regardless of language.

When a user's voice is input, the display apparatus analyzes the input voice and extracts translated data. In an exemplary embodiment, the input voice is converted into text information, and the converted text information is translated into another language. The translated text information is called translated data. The display apparatus separates the translated data into phonemes and searches for a mouth-shaped image which corresponds to each phoneme. For example, when the display apparatus determines a [a] pronunciation 11-1, it searches for a mouth-shaped image 11-2 which corresponds to [a] pronunciation. As such, the display apparatus searches for a mouth-shaped image based on the translated data.

The display apparatus detects mouth area information from the searched mouth-shaped image and creates a changed shape of a user's face.

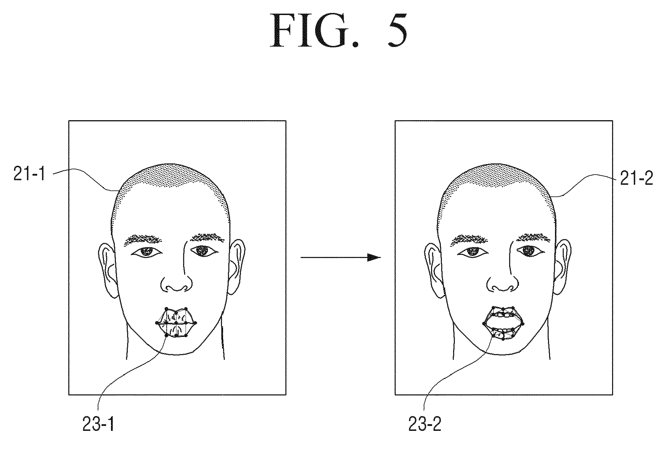

FIG. 5 is a view which explains a process of creating a changed shape of a user's face, according to an exemplary embodiment.

FIG. 5 illustrates an input user's face shape 21-1 and a changed shape of a user's face 12-2. As illustrated in FIG. 4, the display apparatus detects mouth area information from a mouth-shaped image. In an exemplary embodiment, the mouth area information may be mesh information where characteristic points have been connected. The display apparatus extracts the characteristic points from the mouth area 23-1 of the input user's face shape. For example, a plurality of characteristic points may be extracted according to the lip line. The display apparatus connects the extracted characteristic points and creates a mesh structure.

In addition, the display apparatus extracts a plurality of characteristic points and connects the same along the lip line of the searched mouth-shaped image to create a mesh structure. A mesh structure refers to a triangular structure formed by connecting three characteristic points. It is desirable that the number and location of characteristic points of the mouth area 23-1 of the user's face shape is identical to the number and location of the characteristic points of the searched mouth-shaped image.

The display apparatus calculates a changed value of the mouth area 23-1 of the user's face shape using the difference between the coordinates of the characteristic points of the mouth area 23-1 of the user's face shape and the characteristic points of the searched mouth-shaped image, and the size area of the corresponding mesh structure. The display apparatus applies the calculated changed value to the mouth area 23-1 of the user's face shape. The mouth area 23-1 of the user's face shape is changed as in the searched mouth-shaped image. Accordingly, a changed user's face shape 21-2 including the changed mouth area 23-2 is created.

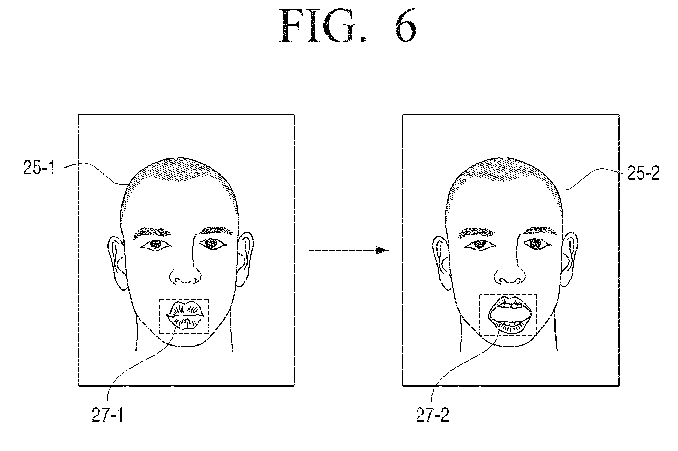

FIG. 6 is a view which explains a process of creating a changed shape of a user's face according to another exemplary embodiment.

With reference to FIG. 6, a shape of the user's face 25-1 and a changed shape of the user's face 25-2, input are illustrated according to another exemplary embodiment. The display apparatus detects mouth area information. Herein, mouth area information refers to the searched mouth-shaped image. The display apparatus detects the mouth area 27-1 from the input user's face shape 25-1 and extracts a certain area.

The display apparatus edits the searched mouth shape image in the mouth area 27-1 of the user's face shape 25-1. Accordingly, a changed shape of a user's face 25-2 having the searched mouth-shaped image 27-2 is created.

The display apparatus may additionally perform image processing on the boundary of the extracted area so that editing of the mouth area can seem natural. For example, gradation may be applied to reduce the color difference, or an image processing process such as 'blur' may be performed to reduce the sense of difference. Furthermore, the display apparatus may extract the characteristic points for the boundary line of a certain detected area and perform a process of changing the boundary line as well. The display apparatus may convert the translated data into translated voice and output the same together with the changed shape of the user's face.

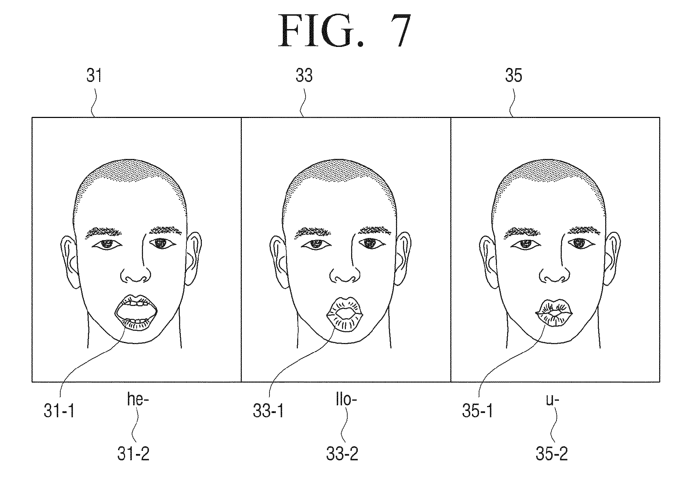

FIG. 7 is a view which explains outputting a changed voice and image according to an exemplary embodiment. FIG. 7 illustrates a process where a hello is translated and is then output together with a changed image of a user.

The display apparatus converts the translated data into translated voice. Conversion into translated voice may be performed by the voice processor. The display apparatus may extract the characteristics of the input voice and apply the same to the translated voice. For example, characteristics of a voice are tone, pitch, and sound quality etc. Voice characteristics such as the tone, pitch and sound quality of a voice may be extracted by detecting the frequency characteristics and the degree of noise. In addition, the detected frequency characteristics and the degree of noise may be applied to the converted translated voice and thus may be converted into a translated voice similar to the input voice.

In addition, the display apparatus may compare the length of the input voice and the length of the translated voice in order to adjust the length of the translated voice. For example, when the length of the user's input voice is 5 seconds and the length of the translated voice is 7 seconds, the length of the translated voice may be adjusted to be 5 seconds or close to 5 seconds. A real time video telephone or video conference is made possible by adjusting the length of the translated voice.

As such, the display apparatus may adjust such that the characteristics of the input voice are applied to the translated voice, and that the length of the translated voice becomes similar to the length of the input voice. The display apparatus may synchronize the changed shape of the user's face to the translated voice and output the result. Synchronization refers to outputting the mouth shape of the changed shape of the user's face shape and the translated voice at the same time so that they correspond to each other.

At the first frame 31 section of FIG. 7, the translated voice is output as [he-] 31-2, and the synchronized mouth shape 31-1 is also output as pronouncing [he-]. At the second frame 33 section, the translated voice is output as 1110-133-2, and the synchronized mouth shape 33-1 is output as pronouncing [llo-] as well.

At the third frame 35 section, the translated voice is output as [u-] 35-2, and the synchronized mouth shape 35-1 is output as pronouncing [u-].

Aforementioned was an explanation related to the process of creating a changed shape of a user's face in a display apparatus. However, in some cases, creating a changed shape of a user's face may be performed in a server instead. A process of creating a changed shape of a user's face in a server is identical to the process performed in a display apparatus. Otherwise, a server may perform voice translation and extraction of mouth area information, and a display apparatus may receive the extracted mouth area information and create a changed shape of a user's face.

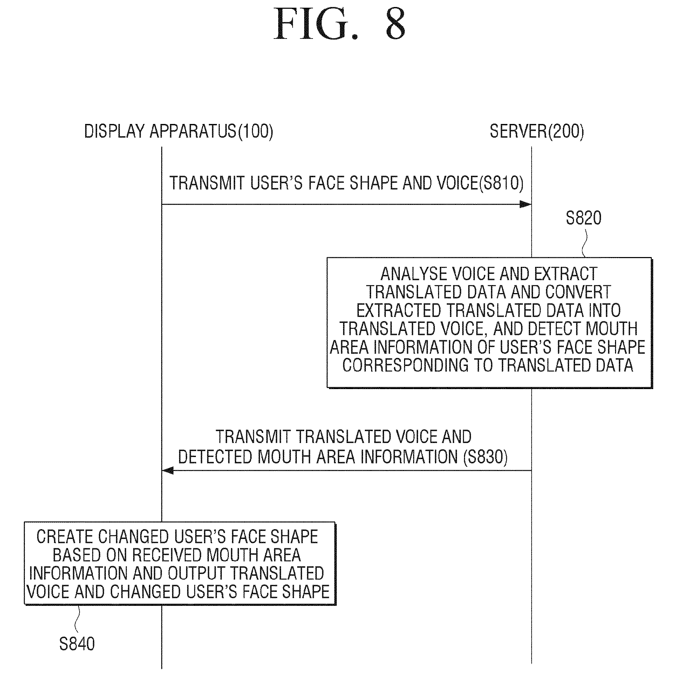

FIG. 8 is a timing diagram which explains a conversion system according to an exemplary embodiment.

With reference to FIG. 8, the display apparatus 100 transmits a user's face shape and voice to the server 200 (S810). The server 200 analyzes the received voice and extracts the translated data, converts the translated data into translated voice, and detects mouth area information related to the shape of the user's face which corresponds to the translated data (S820). The server 200 converts the received voice into text information and translates the converted text information. The server 200 then separates the translated data into phonemes and searches for a mouth-shaped image which corresponds to the phonemes.

In response to the mouth area information being mesh information, the server 200 extracts characteristic points from the searched mouth-shaped image and received user's face shape mouth area and extracts mesh information. The server 200 calculates a conversion relationship using the difference in mesh information between the searched mouth-shaped image and the received user's face shape mouth area. That is, the mouth area information may be mesh information that has a conversion relationship or is information used to calculate a conversion relationship, or is itself a searched mouth-shaped image.

The server 200 transmits the translated voice and detected mouth area information to the display apparatus 100 (S830). The display apparatus 100 creates a user's face shape based on the received mouth area information and outputs the translated voice and changed user's face shape (S840).

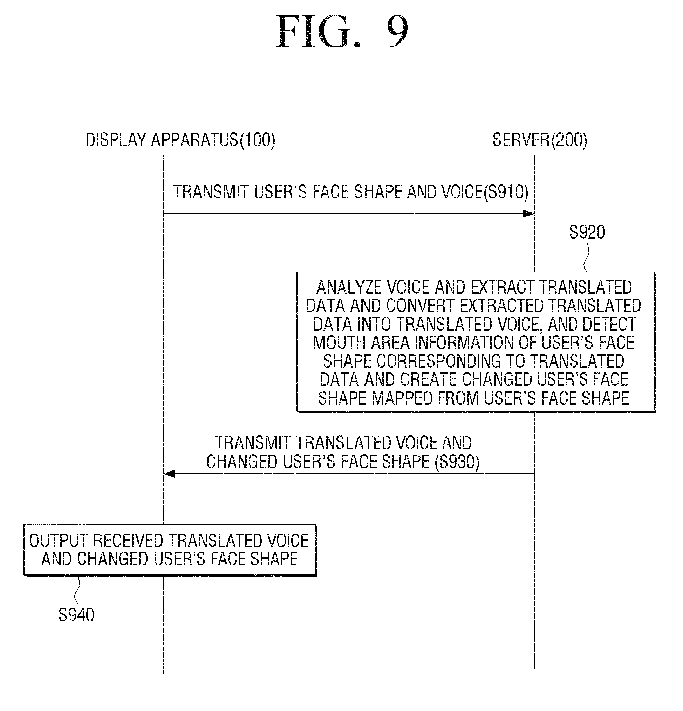

FIG. 9 is a timing diagram explaining a conversion system according to another exemplary embodiment.

With reference to FIG. 9, the display apparatus 100 transmits the user's face shape and voice to the server 200 (S910). The server 200 analyzes the received voice and extracts translated data and converts the translated data into translated voice, and detects mouth area information related to the user's face shape which corresponds to the translated data and forms a changed shape of a user's face which is mapped from the user's face shape (S920). The mouth area information may be a conversion relationship calculated from the mesh information of the mouth area of the user's face shape and the mesh information of the mouth shape image, mesh information itself, or a searched mouth-shaped image.

The server 200 transmits the translated voice and changed shape of the user's face to the display apparatus 100 (S930). The display apparatus 100 outputs the received translated voice and changed shape of the user's face (S940). The specific process is the same as aforementioned, and is thus omitted.

FIGs. 8 and 9 illustrate a process where the display apparatus 100 transmits the user's face shape and voice to the server 200, and receives from the server 200 the mouth area information or changed shape of the user's face, together with the translated voice. However, the server 200 may transmit the detected or created data to another display apparatus besides the display apparatus that transmitted the user's face shape and voice.

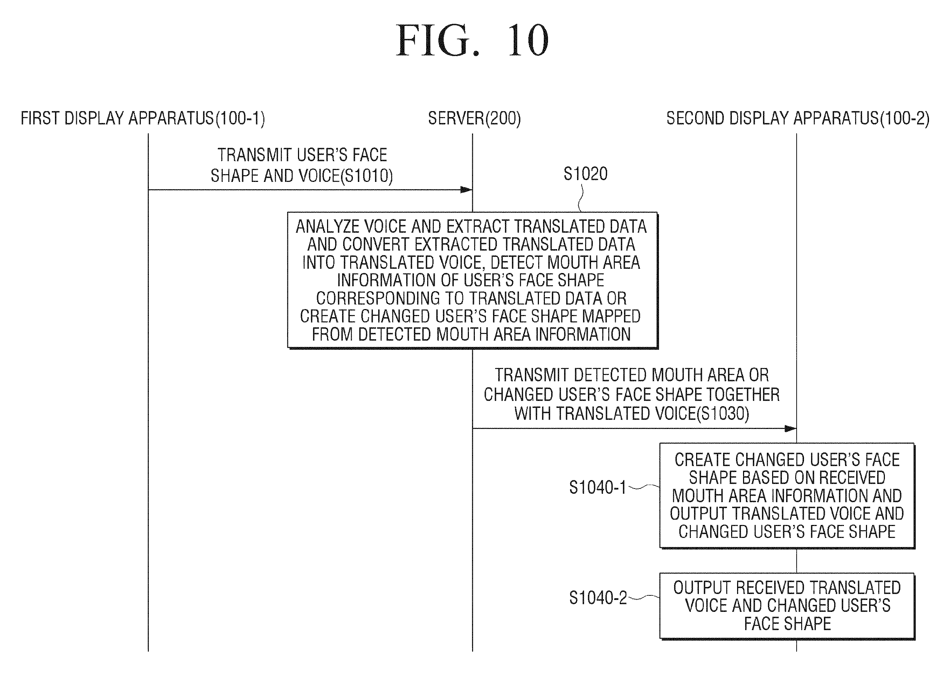

FIG. 10 is a timing view which explains a conversion system according to another exemplary embodiment.

With reference to FIG. 10, the conversion system may include a first display apparatus 100-1, second display apparatus 100-2 and server 200. The first display apparatus 100-1 transmits the user's face shape and voice to the server 200 (S1010). The user's face shape and voice may be input into the first display apparatus 100-1 and be transmitted in real time, or may be stored in the storage of the first display apparatus 100-1 and then transmitted.

The server analyzes the received voice and extracts translated data and converts the translated data into translated voice. In addition, the server 200 detects mouth area information related to the shape of the user's face which corresponds to the translated data. In some cases, the server 200 may create a changed shape of a user's face mapped from detected mouth area information (S1020).

When the server 200 detects the mouth area information, the server 200 transmits the mouth area information to the second display apparatus 100-2 together with the translated voice. Otherwise, when the server 200 created a changed shape of a user's face, the server 200 may transmit the created changed shape of the user's face together with the translated voice (S1030).

When the server 200 transmitted the mouth area information to the second display apparatus 100-2, the second display apparatus 100-2 creates a changed shape of the user's face based on the received mouth area information, and outputs the translated voice and changed shape of the user's face (S1040-1).

When the server 200 transmitted the changed user's face shape to the second display apparatus 100-2, the second display apparatus 100-2 outputs the received changed shape of the user's face together with the translated voice (S1040-2).

That is, the second display apparatus 100-2 may create a changed shape of a user's face and output the same, or output the changed shape of the user's face received from the server 200. Otherwise, the server 200 may transmit the changed shape of the user's face or mouth area information to the display apparatus that transmitted the user's face shape and voice, or may transmit the changed shape of the user's face and mouth area information to another display apparatus.

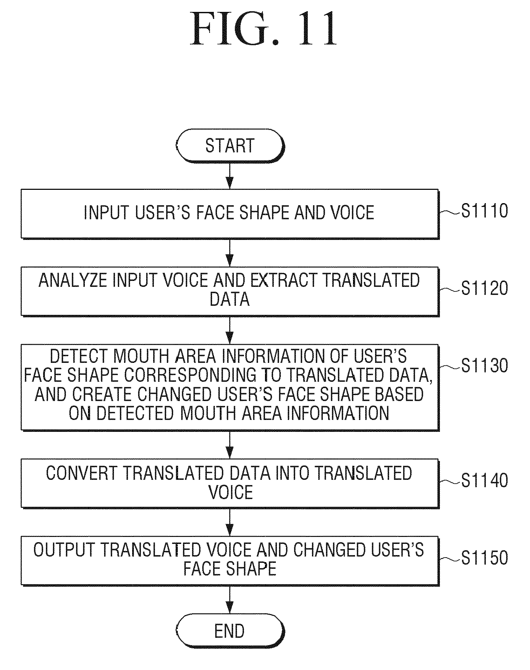

FIG. 11 is a flowchart of a method of controlling a display apparatus according to an exemplary embodiment.

With reference to FIG. 11, the display apparatus receives a user's face shape and voice (S1110). The display apparatus analyzes the input voice and calculates translated data (S1120). The translated data is data made by converting the input voice into text information and translating the converted text information. The display apparatus detects a phoneme using the translated data, and searches a mouth-shaped image which corresponds to the detected phoneme.

The display apparatus detects the mouth area information of the user's face shape which corresponds to the translated data, and creates a changed shape of a user's face based on the detected mouth area information (S1130). An explanation of the specific process was aforementioned and is thus omitted.

The display apparatus converts the translated data into translated voice (S1140). The display apparatus may extract at least one characteristic of the input voice tone, pitch, and sound quality, and may apply the extracted characteristic to the translated voice. In addition, the display apparatus may compare the length of the input voice and the length of the translated voice and may adjust the length of the translated voice.

The display apparatus outputs the translated voice and changed shape of the user's face (S1150). The display apparatus may synchronize the changed shape of the user's face to the translated voice and may output the same.

The method of controlling the display apparatus according to the aforementioned various exemplary embodiments may be embodied in a program and be provided in a display apparatus.

For example, there may be provided a non-transitory computer readable storage medium which stores a program therein as a data structure, and performs a step of analyzing input voice and extracting translated data, a step of detecting information related to a mouth area of the user's face shape which corresponds to the translated data and creating a changed shape of the user's face shape based on the information related to the detected mouth area, a step of converting the translated data into translated voice, and a step of outputting the translated voice and the changed shape of the user's face.

A non-transitory readable storage medium refers to a medium where it is possible to store data semi-permanently and not temporarily and read the stored data by a device, such as a resistor, cache, and memory etc. More specifically, the aforementioned various applications or programs may be stored and provided in non-transitory readable storage medium such as a CD, DVD, hard disk, Blueray Disk™, USB, memory card, and ROM etc.

Although a few exemplary embodiments have been shown and described, it would be appreciated by those skilled in the art that changes may be made to these exemplary embodiments without departing from the invention, the scope of which is defined in the claims.

## Claims

1. An apparatus comprising:
an input means configured to receive a user's face shape and voice;
a voice processor configured to analyze the input voice and extract translated data, and convert the translated data into translated voice;
an image processor configured to detect information related to a mouth area of the user's face shape which corresponds to the translated data, and create a changed shape of a user's face based on the detected information related to the mouth area; and
an output means configured to output the translated voice and changed shape of the user's face.

2. The apparatus according to claim 1,
wherein the image processor is configured to synchronize the changed shape of the user's face to the translated voice.

3. The apparatus according to claim 1 or 2,
wherein the voice processor is configured to compare a length of the input voice and a length of the translated voice and adjust the length of the translated voice based on the comparison.

4. The apparatus according to any one of claims 1 to 3,
wherein the voice processor is configured to extract at least one characteristic of a tone, pitch and sound quality of the input voice and apply the extracted characteristic to the translated voice.

5. The apparatus according to any one of claims 1 to 4,
wherein the information related to the mouth area is configured to be mesh information where characteristic points of the stored mouth-shaped image are connected, and
the image processor extracts a phoneme from the translated data and searches for a corresponding mouth-shaped image, and maps the mesh information where the characteristic points of the searched mouth-shaped image are connected to the user's face shape in order to create a changed shape of the user's face.

6. The apparatus according to any one of claims 1 to 4,
wherein the information related to the mouth area is a stored mouth-shaped image, and
the image processor is configured to extract a phoneme from the translated data and search for a corresponding mouth-shaped image, and edit the searched mouth-shaped image in the face shape to create a changed shape of the user's face.

7. The apparatus according to any one of claims 1 to 6, wherein a display apparatus comprises the input means and output means, the display apparatus further comprising:
a communicator configured to communicate with a server,
wherein the communicator transmits the user's face shape and input voice to the server, and receives from the server the translated voice and changed shaped of the user's face, the server comprising the voice processor and the image processor.

8. The apparatus according to any one of claims 1 to 6, wherein a display apparatus comprises the input means, the output means and the image processing means, the display apparatus further comprising:
a communicator configured to communicate with a server,
wherein the communicator transmits the user's face shape and input voice to the server, and receives from the server the translated voice and information related to the mouth area,
wherein the image processor is configured to create the changed shape of the user's face based on the received information related to the mouth area.

9. The apparatus according to any one of claims 1 to 6, wherein the apparatus is a display apparatus.

10. A server configured to communicate with a display apparatus, the server comprising:
a communicator configured to receive from the display apparatus a user's face shape and voice;
a voice processor configured to analyze the received voice and extract translated data, and convert the translated data into translated voice; and
an image processor configured to detect information related to a mouth area of the user's face shape which corresponds to the translated data,
wherein the communicator is configured to transmit the information related to the mouth area to the display apparatus together with the translated voice.

11. The server according to claim 10,
wherein the image processor is configured to create a changed shape of a user's shape based on the detected information related to the mouth area, and
the communicator is configured to transmit the changed shape of the user's shape to the display apparatus together with the translated voice.

12. A conversion system comprising an apparatus and a server, the system comprising:
an apparatus configured to transmit an input shape of a user's face and input voice to the server; and
a server configured to analyze the input voice and extract translated data and convert the translated data into translated voice, and detect information related to a mouth area of the user's face shape which corresponds to the translated data in order to create a changed shape of the user's face mapped from the user's face shape.
wherein the apparatus is configured to receive from the server the changed shape of the user's face or information related to the mouth area, together with the translated voice.

13. A method of controlling an apparatus, the method comprising:
receiving a user's face shape and voice;
analyzing the input voice and extracting the translated data;
detecting information related to a mouth area of the user's face shape which corresponds to the translated data, and creating a changed shape of a user's face based on the detected information related to the mouth area;
converting the translated data into translated voice; and
outputting the translated voice and the changed shape of the user's face.

14. The method according to claim 13,
wherein the outputting synchronizes the changed shape of the user's face with the translated voice.

15. The method according to claim 13 or 14,
further comprising comparing a length of the input voice and a length of the translated voice and adjusting the length of the translated voice based on the comparison.
